# EUROPEAN PATENT APPLICATION

(11) **EP 4 317 243 A1**
(43) Date of publication of application: **07.02.2024**
(21) Application number: 22779624.0
(22) Date of filing: 17.02.2022
(51) Int. Cl.: C08G 63/06

(54) **MODIFIED POLYESTER RESIN PRODUCTION METHOD**

(30) Priority: 31.03.2021 JP 2021060676
(71) Applicant: DIC CORPORATION, Itabashi-ku Tokyo 174-8520 (JP)
(72) Inventor: SATOKAWA Yuuichi, Sakura-shi Chiba 285-8668 (JP); INAGAKI Shou, Sakura-shi Chiba 285-8668 (JP); ENDOU Mizuki, Tokyo 103-8233 (JP); KAI Hidetomo, Sakura-shi Chiba 285-8668 (JP); TAKANO Akira, Sakura-shi Chiba 285-8668 (JP); DOHI Tomoki, Sakura-shi Chiba 285-8668 (JP)
(74) Representative: Kraus & Lederer Patentanwälte PartGmbB
(86) International application number: PCT/JP2022/006461
(87) International publication number: WO 2022/209397

(57) **Abstract**

[Abstract] A modified polyester resin production method, including a step of allowing a polyhydroxyalkanoic acid to react with a reactive raw material satisfying at least any one of Condition (A-1) and Condition (A-2) described below, and Condition (B) described below, in the absence of a solvent and at a reaction temperature lower than a decomposition temperature of the polyhydroxyalkanoic acid.
Condition (A-1): The reactive raw material contains a diol and a dicarboxylic acid component.
Condition (A-2): The reactive raw material contains a polyester resin other than the polyhydroxyalkanoic acid.
Condition (B): A ratio of an aromatic monomer configuring the reactive raw material in the reactive raw material is 0% by mole or more and less than 50% by mole.

## Description

### TECHNICAL FIELD

The present invention relates to a modified polyester resin production method.

### BACKGROUND ART

Many synthetic resins are not simply decomposed in the natural environment. Accordingly, the deterioration of the natural environment due to the synthetic resin has been a problem. For example, the discarded synthetic resin becomes microplastics and contaminates the marine environment.

A polyhydroxyalkanoic acid is a resin having biodegradability in the fresh water, the marine water, the compost, the soil, and the like, and thus, attracts attention as a resin excellent in the natural environment, is widely used, and is required to expand the future application field.

However, the polyhydroxyalkanoic acid itself is dissolved in some halogen-based solvents, but has poor solvent solubility. Accordingly, it is difficult to use the polyhydroxyalkanoic acid itself in an ink, a coating material, an adhesive agent, and the like. Therefore, in order to improve the solvent solubility of the polyhydroxyalkanoic acid, the modification of the polyhydroxyalkanoic acid has been tried by various methods.

For example, a polyhydroxybutyric acid modification method is proposed in which glycolysis (a reaction temperature of 170°C) is performed on a polyhydroxybutyric acid, which is a polyhydroxyalkanoic acid, with propylene glycol or diethylene glycol, and then, a maleic anhydride is added and heated to 240°C (NPL 1).

In addition, a poly(hydroxybutyrate-co-hydroxyvalerate) modification method is proposed in which ester exchange is performed on poly(hydroxybutyrate-co-hydroxyvalerate), which is a polyhydroxyalkanoic acid, with polybutylene adipate in the presence of a solvent (NPL 2).

### CITATION LIST

### NON PATENT LITERATURE

NPL 1: Macromol. Symp., 331-332, (2013), 97-108
NPL 2: Polymer, 54, (2013), 65-74

### SUMMARY OF INVENTION

### TECHNICAL PROBLEM

In such proposed methods, there is a problem such as requiring the purification of a product due to the use of the solvent and facilitating thermal decomposition.

Therefore, an object of the invention is to provide a modified polyester resin production method capable of producing a modified polyester resin that is obtained by modifying a polyhydroxyalkanoic acid and is excellent in solvent solubility by suppressing thermal decomposition without requiring the purification of a product.

### SOLUTION TO PROBLEM

As a result of intensive studies of the present inventors for solving the problems described above, it has been found that the problems described above can be solved by modifying a polyhydroxyalkanoic acid in the absence of a solvent and at a reaction temperature lower than a decomposition temperature of the polyhydroxyalkanoic acid, by further using a reactive raw material having a small ratio of an aromatic component, and thus, and the invention has been completed.

That is, the invention includes the following aspects.
[1] A modified polyester resin production method, including a step of allowing a polyhydroxyalkanoic acid to react with a reactive raw material satisfying at least any one of Condition (A-1) and Condition (A-2) described below, and Condition (B) described below, in the absence of a solvent and at a reaction temperature lower than a decomposition temperature of the polyhydroxyalkanoic acid.
   Condition (A-1): The reactive raw material contains a diol and a dicarboxylic acid component.
   Condition (A-2): The reactive raw material contains a polyester resin other than the polyhydroxyalkanoic acid.
   Condition (B): A ratio of an aromatic monomer configuring the reactive raw material in the reactive raw material is 0% by mole or more and less than 50% by mole.
[2] The modified polyester resin production method according to [1], in which the reactive raw material satisfies Condition (A-1) described above and Condition (B) described above.
[3] The modified polyester resin production method according to [1], in which the reactive raw material satisfies Condition (A-2) described above and Condition (B) described above.
[4] The modified polyester resin production method according to [3], in which the polyester resin has a viscosity of 4 Pa·s or less at the reaction temperature.
[5] The modified polyester resin production method according to any of [1] to [4], in which the reaction temperature is 100°C or higher and lower than the decomposition temperature of the polyhydroxyalkanoic acid.
[6] The modified polyester resin production method according to any of [1] to [4], in which the reaction temperature is a temperature or lower, which is 15°C lower than the decomposition temperature of the polyhydroxyalkanoic acid.
[7] The modified polyester resin production method according to any of [1] to [6], in which the monomer configuring the polyhydroxyalkanoic acid contains at least any of a hydroxyalkanoic acid represented by Formula (2) described below, lactone of the hydroxyalkanoic acid represented by Formula (2) described below, and lactide of the hydroxyalkanoic acid represented by Formula (2) described below. 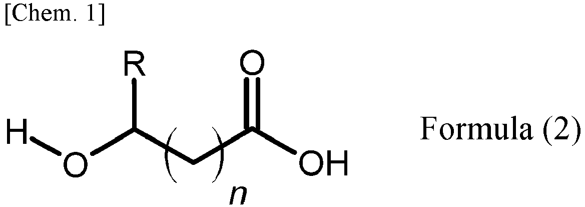 (In Formula (2), R represents a hydrogen atom or an alkyl group having 1 to 6 carbon atoms, and n represents an integer of 0 to 6.)
[8] The modified polyester resin production method according to any of [1] to [7], in which the monomer configuring the polyhydroxyalkanoic acid contains a 3-hydroxybutanoic acid.
[9] The modified polyester resin production method according to [8], in which the monomer configuring the polyhydroxyalkanoic acid further contains at least any one of a 3-hydroxyvaleric acid and a 3-hydroxyhexanoic acid.
[10] The modified polyester resin production method according to [8], in which the monomer configuring the polyhydroxyalkanoic acid further contains a 3-hydroxyhexanoic acid.

### ADVANTAGEOUS EFFECTS OF INVENTION

According to the invention, it is possible to produce the modified polyester resin that is obtained by modifying a polyhydroxyalkanoic acid and is excellent in solvent solubility by suppressing the thermal decomposition without requiring the purification of the product.

### DESCRIPTION OF EMBODIMENTS

Hereinafter, a modified polyester resin production method of the invention will be described in detail, but the following description of constituents is an example as one embodiment of the invention, and is not limited to the contents thereof.

### (Modified Polyester Resin Production Method)

The modified polyester resin production method of the invention includes at least a reaction step, and as necessary, includes other steps.

### <Reaction Step>

In the reaction step, a polyhydroxyalkanoic acid reacts with a reactive raw material.

The reaction is performed in the absence of a solvent and at a reaction temperature lower than a decomposition temperature of the polyhydroxyalkanoic acid.

By performing the reaction in the absence of a solvent, it is not necessary to perform a step of removing an organic solvent from a reaction product, which is a purification step.

In addition, by performing the reaction at the reaction temperature lower than the decomposition temperature of the polyhydroxyalkanoic acid, it is possible to suppress the thermal decomposition of the polyhydroxyalkanoic acid. Therefore, it is possible to suppress the generation of a by-product, a decrease in the molecular weight of a modified polyester resin, which is a reactive product, and the like. Accordingly, the molecular weight is easily controlled.

"In the absence of a solvent" indicates that an organic solvent for dissolving a monomer component, a catalyst, and the like, which is used in the production of the general polyester resin, is not used.

The decomposition temperature of the polyhydroxyalkanoic acid, for example, can be evaluated by gel permeation chromatography (GPC), on the basis of a method described in NPL (Macromolecules, 23, (1990), 1933-1936). The average degree of polymerization of a sample when performing a thermal treatment at a certain temperature is measured by GPC, and from the time dependency of the reciprocal number thereof, a thermal decomposition constant at each temperature can be calculated. A temperature at which the thermal decomposition constant is 1 × 10⁻⁵ min⁻¹ or more is set to the decomposition temperature of the polymer.

### <<Polyhydroxyalkanoic Acid>>

The polyhydroxyalkanoic acid may be a homopolymer including one type of monomer, or may be a copolymer including two or more types of monomers. In a case where the polyhydroxyalkanoic acid is the copolymer, the polyhydroxyalkanoic acid may be either a random copolymer or a block copolymer.

A repeating unit in the polyhydroxyalkanoic acid, for example, is represented by Formula (1) described below. 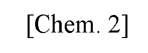 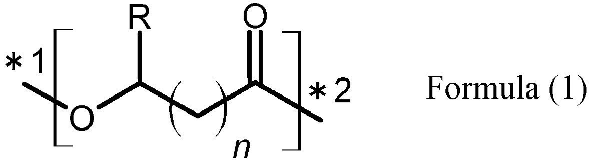 (In Formula (1), R represents a hydrogen atom or an alkyl group having 1 to 6 carbon atoms, and n represents an integer of 0 to 6. * 1 and *2 represent a bond.)

Examples of the monomer configuring the polyhydroxyalkanoic acid include a hydroxyalkanoic acid represented by Formula (2) described below, lactone of the hydroxyalkanoic acid represented by Formula (2) described below, and lactide of the hydroxyalkanoic acid represented by Formula (2) described below. 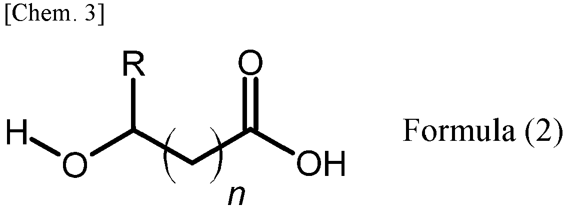 (In Formula (2), R represents a hydrogen atom or an alkyl group having 1 to 6 carbon atoms, and n represents an integer of 0 to 6.)

Specific examples of the monomer configuring the polyhydroxyalkanoic acid include a lactic acid, a glycolic acid, a 3-hydroxybutyric acid (a 3-hydroxybutanoic acid), a 4-hydroxybutanoic acid, a 3-hydroxyvaleric acid (a 3-hydroxypentanoic acid), a 3-hydroxyhexanoic acid, a 6-hydroxyhexanoic acid, lactide of the lactic acid, and ε-caprolactone.

In a case where the monomer configuring the polyhydroxyalkanoic acid is an enantiomer, the monomer may be either an L-isomer and a D-isomer, and in some cases, the D-isomer and the L-isomer may exist together in the polymer (a DL-isomer), but from the viewpoint of being excellent in physical properties such as a mechanical strength, either the D-isomer or the L-isomer is preferable.

Examples of the polyhydroxyalkanoic acid include a polylactic acid, a polyglycolic acid, a poly-3-hydroxybutanoic acid (P3HB), a poly-4-hydroxybutanoic acid, a poly(3-hydroxybutyrate-co-3-hydroxyvalerate) (PHBV), poly(3-hydroxybutyrate-co-3-hydroxyhexanoate) (PHBH), and poly-ε-caprolactone. Among them, the poly(3-hydroxybutyrate-co-3-hydroxyhexanoate) (PHBH) is preferable. A repeating unit derived from a 3-hydroxyhexanoic acid decreases the crystallinity and the melting point of the polyhydroxyalkanoic acid, and make the solubility of the polyhydroxyalkanoic acid to the reactive raw material excellent. As a result thereof, reactivity in the reaction step is improved.

In a case where the polyhydroxyalkanoic acid is set to the decomposition temperature or higher, the thermal decomposition is likely to occur. Accordingly, by performing the reaction at the reaction temperature lower than the decomposition temperature of the polyhydroxyalkanoic acid, it is possible to suppress the thermal decomposition of the polyhydroxyalkanoic acid.

An example of the thermal decomposition of the polyhydroxyalkanoic acid is thermal decomposition derived from a quasi-6-membered ring structure as described below.

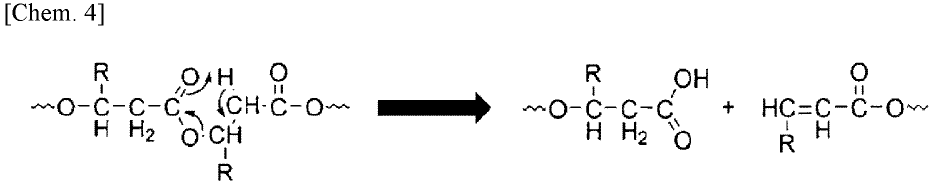

In addition, another example of the thermal decomposition of the polyhydroxyalkanoic acid is thermal decomposition that occurs by the backbiting of a polymer chain end as described below.

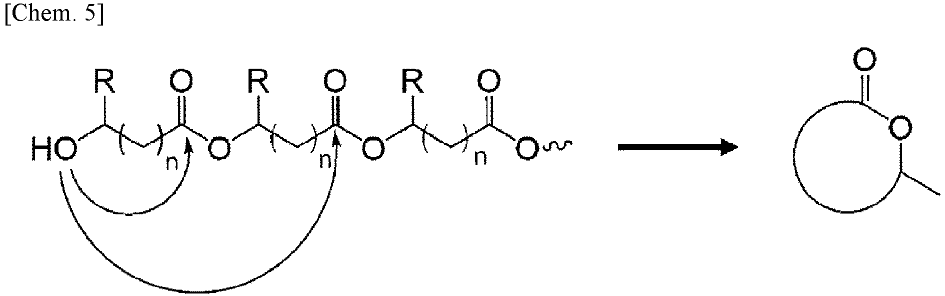

The polyhydroxyalkanoic acid that is used may be synthesized, or may be a commercially available product.

The polyhydroxyalkanoic acid that is used indicates that the average degree of polymerization of the monomer configuring the polyhydroxyalkanoic acid is 10 or more.

The polyhydroxyalkanoic acid can be synthesized, for example, by using a general polyester resin synthesis method.

### <<Reactive Raw Material>>

The reactive raw material satisfies at least any one of Condition (A-1) and Condition (A-2) described below, and Condition (B) described below.
Condition (A-1): The reactive raw material contains a diol and a dicarboxylic acid component.
Condition (A-2): The reactive raw material contains a polyester resin other than the polyhydroxyalkanoic acid.
Condition (B): A ratio of an aromatic monomer configuring the reactive raw material in the reactive raw material is 0% by mole or more and less than 50% by mole.

Here, in Condition (B), in a case where the reactive raw material contains the polyester resin, the aromatic monomer configuring the reactive raw material includes an aromatic monomer configuring the polyester resin.

For example, in a case where the reactive raw material contains only the polyester resin, and the polyester resin contains non-aromatic diol, a non-aromatic dicarboxylic acid, and an aromatic carboxylic acid at a molar ratio (Non-Aromatic Diol : Non-Aromatic Dicarboxylic Acid : Aromatic Carboxylic Acid) of 2 : 1 : 1, as a constituent monomer, the ratio of the aromatic monomer configuring the reactive raw material in the reactive raw material is 25% by mole.

In addition, for example, in a case where the reactive raw material contains only non-aromatic diol (A), an aromatic dicarboxylic acid component (B), and a polyester resin (C), the polyester resin (C) contains non-aromatic diol, a non-aromatic dicarboxylic acid, and an aromatic carboxylic acid at a molar ratio (Non-Aromatic Diol : Non-Aromatic Dicarboxylic Acid : Aromatic Carboxylic Acid) of 2 : 1 : 1, as a constituent monomer, and in the reaction raw material, a molar number (MC) of the constituent monomer in the polyester resin (C), a molar number (MA) of the non-aromatic diol (A), and a molar number (MB) of the aromatic dicarboxylic acid component (B) are MC : MA : MB = 2 : 1 : 1, the ratio of the aromatic monomer configuring the reactive raw material in the reactive raw material is [(2 × 0.25 + 1)/(2 + 1 + 1)] = 37.5%.

### <<<Condition (A-1)>>>

Condition (A-1) is a condition in which the reactive raw material contains the diol and the dicarboxylic acid component.

### -Diol-

In Condition (A-1), examples of the diol contained in the reactive raw material include non-aromatic diol and aromatic diol.

Examples of the non-aromatic diol include aliphatic diol, and alicyclic diol.

The non-aromatic diol, for example, has 1 to 15 carbon atoms.

Examples of the aliphatic diol include ethylene glycol, 1,3-propylene glycol, 1,2-propylene glycol, 1,4-butylene glycol, 2-methyl-1,3-propanediol, neopentyl glycol, cyclohexane dimethanol, 1,5-pentanediol, 3-methyl-1,5-pentanediol, 1,6-hexanediol, methyl pentanediol, dimethyl butanediol, butyl ethyl propanediol, diethylene glycol, triethylene glycol, tetraethylene glycol, dipropylene glycol, and tripropylene glycol.

Examples of the alicyclic diol include alicyclic diol having 6 to 15 carbon atoms. Examples of the alicyclic diol include 1,3-bis(2-hydroxypropyl) cyclopentane, 1,3-bis(2-hydroxybutyl) cyclopentane, 1,4-bis(hydroxymethyl) cyclohexane, 1,4-bis(2-hydroxypropyl) cyclohexane, and 1,4-bis(2-hydroxybutyl) cyclohexane.

Examples of the aromatic diol include aromatic diol having 6 to 20 carbon atoms. Examples of the aromatic diol having 6 to 20 carbon atoms include 1,3-benzene dimethanol, 1,4-benzene dimethanol, 1,4-benzene diethanol, and 1,4-bis(2-hydroxyethoxy) benzene.

Only one type of the diol may be used alone, or two or more types thereof may be used in combination.

### -Dicarboxylic Acid Component-

In Condition (A-1), examples of the dicarboxylic acid component contained in the reactive raw material include a dicarboxylic acid, an anhydride thereof, a halide thereof, and an esterified product.

Examples of the dicarboxylic acid include a non-aromatic dicarboxylic acid and an aromatic dicarboxylic acid.

Examples of the non-aromatic dicarboxylic acid include an aliphatic dicarboxylic acid, an alicyclic dicarboxylic acid, and an unsaturated bond-containing non-aromatic dicarboxylic acid.

The non-aromatic dicarboxylic acid, for example, has 3 to 15 carbon atoms.

Examples of the aliphatic dicarboxylic acid include a succinic acid, an adipic acid, an azelaic acid, a sebacic acid, and a dodecane dicarboxylic acid.

Examples of the alicyclic dicarboxylic acid include an alicyclic dicarboxylic acid having 8 to 15 carbon atoms. Examples of the alicyclic dicarboxylic acid include a 1,3-cyclopentane dicarboxylic acid, and a 1,4-cyclohexane dicarboxylic acid.

Examples of the unsaturated bond-containing non-aromatic dicarboxylic acid include a maleic acid, and a fumaric acid.

Examples of the aromatic dicarboxylic acid include an aromatic dicarboxylic acid having 6 to 20 carbon atoms.

Examples of the aromatic dicarboxylic acid include an orthophthalic acid, a terephthalic acid, an isophthalic acid, a 1,4-naphthalene dicarboxylic acid, a 2,5-naphthalene dicarboxylic acid, a 2,6-naphthalene dicarboxylic acid, a naphthalic acid, a biphenyl dicarboxylic acid, and a 1,2-bis(phenoxy) ethane-p,p'-dicarboxylic acid.

A molar ratio of the diol to the dicarboxylic acid component (Diol Component/Dicarboxylic Acid) of the reactive raw material is preferably 1.0 to 2.0, and particularly preferably 1.05 to 1.40.

### <<<Condition (A-2)>>>

Condition (A-2) is a condition in which the reactive raw material contains the polyester resin other than the polyhydroxyalkanoic acid.

### -Polyester Resin-

Examples of the polyester resin include a polycondensate of polyhydric alcohol such as diol and a polycarboxylic acid component such as a dicarboxylic acid component.

The polyester resin, for example, may have a urethane bond, a urea bond, and the like, in addition to an ester bond.

The polyester resin, for example, is polyester polyol. When synthesizing the polyester resin, the polyester polyol, for example, can be synthesized by using the polyhydric alcohol and the polycarboxylic acid component such that hydroxyl groups are excessive to carboxyl groups.

The molecular weight of the polyester resin is not particularly limited.

The viscosity of the polyester resin at the reaction temperature is not particularly limited, and is preferably 4 Pa s or less, more preferably 1.0 Pa s or less, and particularly preferably 0.5 Pa·s or less. As the viscosity of the polyester resin at the reaction temperature decreases, the polyhydroxyalkanoic acid and the polyester resin are easily mixed.

The viscosity can be measured by the following method.

### [Viscosity Measurement Method]

The viscosity of the polyester resin can be measured by using a rotational rheometer. For example, the viscosity can be measured in the condition of a gap of 1 mm and a shear rate of 10 s⁻¹, by a rotational rheometer "MCR-102", manufactured by Anton Paar GmbH, by setting a measurement temperature to be the same as the reaction temperature, and by using a parallel plate jig with a diameter of 25 mm as a measurement jig.

The polyester resin that is used may be synthesized, or may be a commercially available product.

The polyester resin can be synthesized by using a general polyester resin synthesis method.

### <<<Condition (B)>>>

Condition (B) is a condition in which the ratio of the aromatic monomer configuring the reactive raw material in the reactive raw material is 0% by mole or more and less than 50% by mole.

In a case where the polyhydroxyalkanoic acid is modified, the solvent solubility of the obtained modified polyester resin increases. However, in a case where there are many aromatic components used in the modification when the polyhydroxyalkanoic acid is modified to produce the modified polyester resin, the degree of improvement of the solvent solubility in the obtained modified polyester resin decreases. From this viewpoint, in the modified polyester resin production method of the invention, Condition (B) is required.

In Condition (B), the ratio of the aromatic monomer configuring the reactive raw material in the reactive raw material is preferably 40% by mole or less, more preferably 30% by mole or less, and particularly preferably 20% by mole or less, from the viewpoint of the solvent solubility of the modified polyester resin. As the ratio of the aromatic monomer configuring the reactive raw material in the reactive raw material decreases, the modified polyester resin excellent in the solvent solubility is obtained even in a case where a ratio of the polyhydroxyalkanoic acid in the modified polyester resin increases.

Examples of the aromatic monomer include polyhydric alcohol having an aromatic group, such as aromatic diol, and a polycarboxylic acid component having an aromatic group, such as an aromatic dicarboxylic acid component.

The reactive raw material may contain a reactive raw material other than the diol, the dicarboxylic acid component, and the polyester resin. Examples of such a reactive raw material include trivalent or higher polyhydric alcohol and a trivalent or higher polycarboxylic acid component.

The total content of the diol, the dicarboxylic acid component, and the polyester resin in the reactive raw material is not particularly limited, and is preferably 80% by mass or more and 100% by mass or less of the reactive raw material.

A mass ratio (PHA : Reactive Raw Material) of the polyhydroxyalkanoic acid (PHA) and the reactive raw material in the reaction is not particularly limited, and for example, may be 1 : 99 to 99 : 1, 5 : 95 to 95 : 5, or 10 : 90 to 90 : 10.

In a case where the reactive raw material satisfies Condition (A-1), a mass ratio [PHA : (Total of Diol and Dicarboxylic Acid Component)] of the polyhydroxyalkanoic acid (PHA) and the total of the diol and the dicarboxylic acid component in the reaction is preferably 1 : 99 to 50 : 50, more preferably 3 : 97 to 40 : 60, and particularly preferably 5 : 95 to 20 : 80, from the viewpoint of more excellent solvent solubility of the obtained modified polyester resin.

In a case where the reactive raw material satisfies Condition (A-2), a mass ratio (PHA : PE) of the polyhydroxyalkanoic acid (PHA) and the polyester resin (PE) in the reaction is preferably 10 : 90 to 90 : 10, more preferably 10 : 90 to 70 : 30, and particularly preferably 15 : 85 to 70 : 30, from the viewpoint of the compatibility between the polyhydroxyalkanoic acid and the polyester resin.

The reaction may be performed in the absence of a catalyst, or may be performed in the presence of a catalyst.

Examples of the catalyst used in the reaction include an acid catalyst. Examples of the acid catalyst include a tin-based catalyst such as monobutyl tin oxide and dibutyl tin oxide; a titanium-based catalyst such as titanium tetraisopropoxide and titanyl acetyl acetonate; and a zirconia-based catalyst such as tetra-butyl-zirconate. It is preferable to use the titanium-based catalyst, from the viewpoint of increasing the activity of an ester exchange reaction and an esterification reaction.

The amount of catalyst used in the reaction is not particularly limited, and for example, is preferably 1 to 1000 mass ppm, and more preferably 10 to 100 mass ppm, with respect to the reactive raw material that is used.

The reaction temperature is not particularly limited insofar as the reaction temperature is lower than the decomposition temperature of the polyhydroxyalkanoic acid, and is preferably 100°C or higher, more preferably 120°C or higher, and particularly preferably 130°C or higher.

In addition, the reaction temperature is preferably a temperature (Td-15°C) or lower that is 15°C lower than the decomposition temperature (Td) of the polyhydroxyalkanoic acid, and more preferably a temperature (Td-20°C) or lower that is 20°C lower than the decomposition temperature (Td) of the polyhydroxyalkanoic acid, from the viewpoint of further suppressing the thermal decomposition of the polyhydroxyalkanoic acid.

In addition, the reaction temperature is preferably a temperature (Td-50°C) or higher that is 50°C lower than the decomposition temperature (Td) of the polyhydroxyalkanoic acid, and more preferably a temperature (Td-40°C) or higher that is 40°C lower than the decomposition temperature (Td) of the polyhydroxyalkanoic acid, from the viewpoint of preventing the progress of the reaction from being delayed.

In the reaction step, the ester exchange reaction and the esterification reaction mainly occur.

In a case where there are two or more types of reactive raw materials, in the reaction step, the order of allowing the polyhydroxyalkanoic acid to react with two types of reactive raw materials is not particularly limited. From this viewpoint, the reaction step, for example, may be performed by any one method of (i) to (iii) described below, or a combination of two or more types thereof. Among them, (i) or (ii) is preferable, from the viewpoint of easily attaining more excellent solvent solubility of the obtained modified polyester resin.
(i): A method of putting the polyhydroxyalkanoic acid, the diol, and the dicarboxylic acid in a reaction vessel to react with each other
(ii): A method of putting the polyhydroxyalkanoic acid and the diol to a reaction vessel to react with each other, and then, further adding the dicarboxylic acid component to the reaction vessel to further react with each other
(iii): A method of allowing the polyester resin to react with the polyhydroxyalkanoic acid

In (i), it is considered that <1> to <5> described below occur as the ester exchange reaction and the esterification reaction.

In (ii), it is considered that <1> to <5> described below occur as the ester exchange reaction and the esterification reaction.

In (iii), it is considered that <5> described below occurs as the ester exchange reaction and the esterification reaction.

### <1>: An ester exchange reaction between the polyhydroxyalkanoic acid and the diol

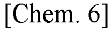

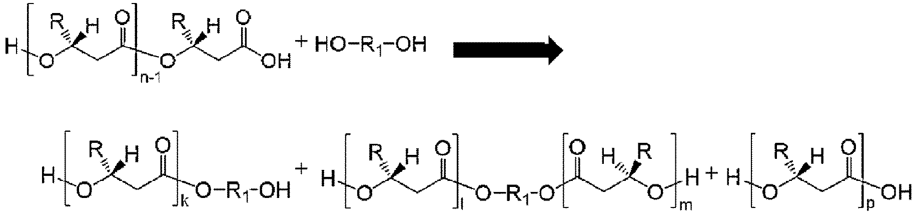

In the formula, R, for example, represents a hydrogen atom or an alkyl group. R₁, for example, represents an alkylene group. k represents a positive integer. 1 represents a positive integer. m represents a positive integer. p represents a positive integer. n represents a positive integer.

### <2>: An esterification reaction between the diol and the dicarboxylic acid

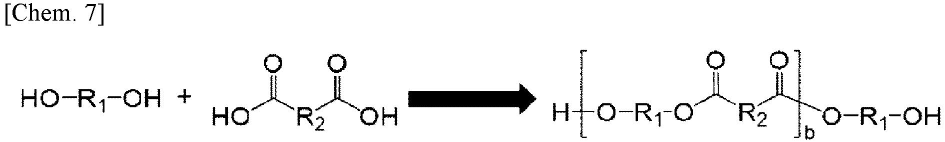

In the formula, R₁, for example, represents an alkylene group. R₂, for example, represents an alkylene group. b represents a positive integer.

### <3>: An esterification reaction between the diol and the polyhydroxyalkanoic acid

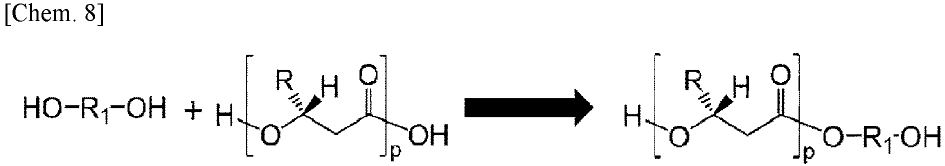

In the formula, R₁, for example, represents an alkylene group. R, for example, represents a hydrogen atom or an alkyl group. p represents a positive integer.

### <4>: An esterification reaction between a product of <3> and the dicarboxylic acid

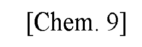

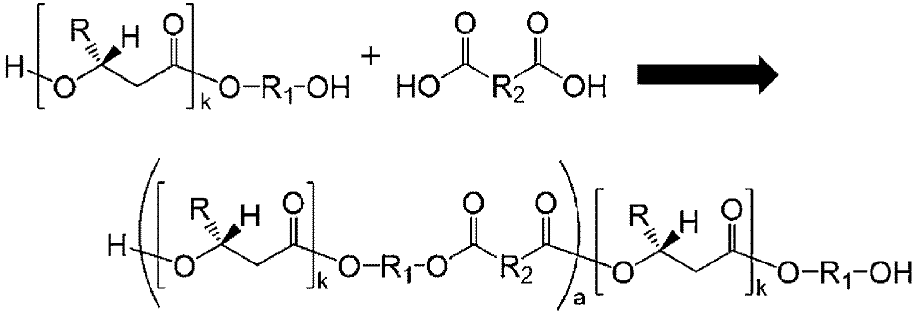

In the formula, R, for example, represents a hydrogen atom or an alkyl group. R₁, for example, represents an alkylene group. R₂, for example, represents an alkylene group. k represents a positive integer. a represents a positive integer.

### <5>: An ester exchange reaction between the polyester polyol and the polyhydroxyalkanoic acid

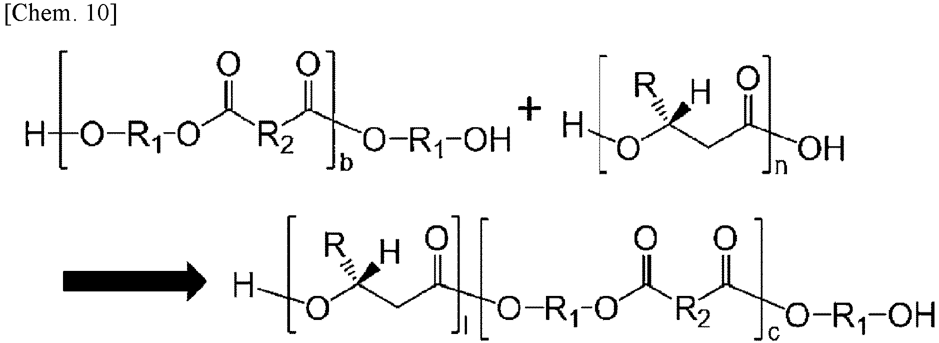

In the formula, R, for example, represents a hydrogen atom or an alkyl group. R₁, for example, represents an alkylene group. R₂, for example, represents an alkylene group. b represents a positive integer. c represents a positive integer. 1 represents a positive integer. n represents a positive integer.

Note that, in (iii), first, the polyester resin may be synthesized from the diol and the dicarboxylic acid in the reaction vessel, and then, the polyhydroxyalkanoic acid may be added to the reaction vessel, and thus, the ester exchange reaction of <5> may be performed.

In the reaction step, a treatment of dissolving the polyhydroxyalkanoic acid in the reactive raw material at a temperature lower than the reaction temperature may be performed.

The reaction includes the esterification reaction, which is a condensation reaction, and thus, water, lower alcohol, and the like are generated as a by-product. These byproducts are removed from a reaction system in the reaction step, and thus, the condensation reaction easily progresses.

From the viewpoint that in the early stage of the reaction, the polyhydroxyalkanoic acid is not dissolved (an inhomogeneous state) in the other components (for example, the diol, the dicarboxylic acid component, and the polyester polyol) even by heating, but is dissolved (a homogeneous state) as the reaction progresses, it is preferable that the reaction is performed in a batch type reactor rather than a continuous reactor.

It is preferable that the reaction is performed until the monomer (for example, the diol and the dicarboxylic acid component) in the reactive raw material does not remain in the reaction system. The molecular weight is measured by gel permeation chromatography (GPC), and the progress of the reaction, for example, can be determined in accordance with a change in the molecular weight. For example, the product in the reaction system is taken out at a fixed time interval, the molecular weight is measured by GPC, and whether the monomer in the reactive raw material remains in the reaction system can be checked by the fact that a change in the molecular weight is not observed. In addition, the progress of the reaction, for example, can be performed by following a decrease in the dicarboxylic acid component with the measurement of an acid value.

It is preferable that the hydroxyl value of the obtained modified polyester resin is 5.0 mgKOH/g or more. In a case where the hydroxyl value is 5.0 mgKOH/g or more, the solvent solubility of the modified polyester resin is further improved. This is because a relationship between the hydroxyl group and the molecular weight is an inverse relationship, and thus, in a case where the hydroxyl value is 5.0 mgKOH/g or more, the molecular weight is suitably kept low.

It is preferable that the obtained modified polyester resin has a number average molecular weight (Mn) in a range of 1000 to 35000 g/mol.

It is preferable that the obtained modified polyester resin has a weight average molecular weight (Mw) in a range of 2000 to 50000 g/mol.

A Mw/Mn ratio of the obtained modified polyester resin is preferably 1 to 6, and more preferably 2 to 4.

The obtained modified polyester resin, for example, can be used as a resin component of an ink, a coating material, an adhesive agent, a pressure-sensitive adhesive agent, and the like.

### EXAMPLES

Hereinafter, the invention will be described in more detail, with reference to Examples, but the scope of the invention is not limited to Examples described below.

Note that, hereinafter, "parts" indicates "parts by mass".

### <Evaluation of Amount of Residual Monomer>

In Examples and Comparative Examples, the presence or absence of the residual monomer of synthetic product was determined from a measurement result obtained in the following condition by gas chromatography (GC) analyzer provided with a flame ionization detector.
Measurement Device: "6850 Series", manufactured by Agilent Technologies, Ltd.
Column: "Agilent DB-1 and DB-WAX", manufactured by Agilent Technologies, Ltd.
Carrier Gas: helium
Flow Rate: 1 mL/min
Injection Temperature: 300°C
Detection Temperature: 300°C
Temperature Increase: 50°C to 325°C (25°C/min)

### <Evaluation of Thermal Decomposition Rate>

In Examples and Comparative Examples, the thermal decomposition rate of the synthetic product was determined from a measurement result obtained in the following condition by using nuclear magnetic resonance (NMR), on the basis of a method described in NPL (Eur. Polym. J., 90, (2017), 92-104).
¹H-NMR
Measurement Device: "JNM-ECM400S", manufactured by JEOL Ltd.
Magnetic Field Intensity: 400 MHz
Cumulated Number: 16 times
Solvent: deuterated chloroform (CDCl₃)
Sample Concentration: 2 mg/0.5 ml

### [Evaluation Criterion]

A: The thermal decomposition rate is less than 5%
B: The thermal decomposition rate is 5% or more and less than 10%
C: The thermal decomposition rate is 10% or more

### <Evaluation of Molecular Weight>

In Examples and Comparative Examples, the molecular weight of the synthetic product is a value measured in the following condition by using gel permeation chromatography (GPC).
Measurement Device: System Controller Waters 600 Controller
   Liquid Feeding Pump: Waters Model Code 60F
   Refractive Index (RI) Detector: Waters 2414
   Autosampler: Waters 717plus Autosampler
Data Processing: Waters Empowers
Measurement Condition
Measurement Condition: Column Temperature 40°C
   Eluent: chloroform (CHCl₃)
   Flow Rate: 1.0 ml/minute
Standard: polystyrene
Column: one Shodex GPC LF-G
   four Shodex GPC LF-804
Sample: obtained by filtering a chloroform solution of 0.4% by mass in terms of resin solid content with a microfilter (100 µl)

### <Evaluation of Acid Value>

In Examples and Comparative Examples, the acid value of the synthetic product is a value measured by an acid value measurement method described in JIS-K0070.

### <Measurement of Hydroxyl Value>

In Examples and Comparative Examples, the hydroxyl value of the synthetic product is a value measured by a hydroxyl value measurement method according to a phthalization method described in JIS-K1157.

### <Evaluation of Solvent Solubility>

In Examples and Comparative Examples, a solution of 10% by mass of the synthetic product was prepared, and the solvent solubility of the synthetic product was evaluated from the external appearance at a room temperature (25°C) and when heating to 70°C.

### Evaluation Criterion:

A: Soluble at the room temperature
B: Insoluble at the room temperature but soluble when heating to 70°C
C: Insoluble at the room temperature and even when heating to 70°C

### <Viscosity Measurement Method>

In Examples and Comparative Examples, the viscosity of the polyester resin is a value measured in the condition of a gap of 1 mm and a shear rate of 10 s⁻¹ by using a rotational rheometer "MCR-102", manufactured by Anton Paar GmbH, by setting the measurement temperature to be the same as the reaction temperature, and by using a parallel plate jig with a diameter of 25 mm as a measurement jig.

### (Example 1)

100 parts of poly(3-hydroxybutyrate-co-3-hydroxyvalerate), 274 parts of 3-methyl-1,5-pentanediol, and 0.074 parts of titanyl acetyl acetate were put in a batch type polyester reaction vessel provided with a stirrer, a nitrogen gas introduction pipe, a rectification pipe, a moisture separator, and the like, and the inner temperature was retained at 145°C under a stream of nitrogen. When it was checked that there was no change in the molecular weight by GPC, 367 parts of a sebacic acid were put, and the inner temperature was further retained at 145°C under a stream of nitrogen. When the acid value was 2 mgKOH/g or less, the reaction was completed, and polyester polyol (PHA-modified polyester) was obtained.

As a result of the GC measurement, the residual monomer was not checked.

The evaluation result of the thermal decomposition rate by the NMR method was A.

The evaluation result of the solvent solubility was A.

### (Example 2)

Polyester polyol was obtained as with Example 1, except that as a raw material, poly(3-hydroxybutyrate), 3-methyl-1,5-pentanediol, a sebacic acid, and titanyl acetyl acetate were used as with a compounding amount shown in Table 1.

As a result of the GC measurement, the residual monomer was not checked.

The evaluation result of the thermal decomposition rate by the NMR method was A.

The evaluation result of the solvent solubility was A.

### (Example 3)

Polyester polyol was obtained as with Example 1, except that as a raw material, poly(3-hydroxybutyrate-co-3-hydroxyhexanoate), 1,6-hexanediol, an adipic acid, and titanyl acetyl acetate were used as with a compounding amount shown in Table 1.

As a result of the GC measurement, the residual monomer was not checked.

The evaluation result of the thermal decomposition rate by the NMR method was A.

The evaluation result of the solvent solubility was A.

### (Example 4)

Polyester polyol was obtained as with Example 1, except that as a raw material, poly(3-hydroxybutyrate-co-3-hydroxyhexanoate), 2-methyl-1,3-propanediol, 1,4-benzene dimethanol, a sebacic acid, and titanium tetraisopropoxide were used as with a compounding amount shown in Table 1.

As a result of the GC measurement, the residual monomer was not checked.

The evaluation result of the thermal decomposition rate by the NMR method was A.

The evaluation result of the solvent solubility was A.

### (Example 5)

Polyester polyol was obtained as with Example 1, except that as a raw material, poly(3-hydroxybutyrate-co-3-hydroxyhexanoate), 3-methyl-1,5-pentanediol, a dimer acid, and titanyl acetyl acetate were used as with a compounding amount shown in Table 1.

As a result of the GC measurement, the residual monomer was not checked.

The evaluation result of the thermal decomposition rate by the NMR method was A.

The evaluation result of the solvent solubility was A.

### (Example 6)

The same procedure as that of Example 4 was performed, and then, the reaction was continuously performed by setting the reaction vessel in a highly depressurized state, water and glycol generated as a by-product were continuously removed, and polyester polyol was obtained.

The evaluation result of the solvent solubility was as shown in Table 2.

### (Comparative Example 1)

Polyester polyol was obtained as with Example 1, except that a retention temperature was set to 180°C.

The evaluation result of the thermal decomposition rate by the NMR method was C.

### (Comparative Example 2)

Polyester polyol was obtained as with Example 1, except that as a raw material, poly(3-hydroxybutyrate-co-3-hydroxyhexanoate), 2-methyl-1,3-propanediol, 1,4-benzene dimethanol, a sebacic acid, and titanium tetraisopropoxide were used as with a compounding amount shown in Table 1.

The evaluation result of the solvent solubility was C.

The reaction conditions of Examples 1 to 6 and Comparative Examples 1 and 2 were collectively shown in Table 1.

Note that, the reactions of Examples 1 to 6 and Comparative Examples 1 and 2 correspond to the following method (ii).
(ii): A method of putting the polyhydroxyalkanoic acid and the diol in the reaction vessel to react with each other, and then, further adding the dicarboxylic acid component to the reaction vessel to further react with each other

**[Table 1]**

| | Raw Material | | | | | | | | | | | | Reaction Temperature (°C) |
|---|---|---|---|---|---|---|---|---|---|---|---|---|---|
| | PHA | | Diol | | | | Dicarboxylic Acid | | Compounding Amount (Parts) of Diol + Dicarboxylic Acid | Aromatic Molar Ratio (%) | Catalyst | | |
| | | | Aliphatic | | Aromatic | | Aliphatic | | | | | | |
| | Type | Compounding Amount (Parts) | Type | Compounding Amount (Parts) | Type | Compounding Amount (Parts) | Type | Compounding (Parts) | | | Type | Compounding Amount (Parts) | |
| Example 1 | PHBV | 100 | 3MPD | 274 | - | - | Sebacic Acid | 367 | 641 | 0 | Ti (acac) | 0.074 | 145 |
| Example 2 | P3HB | 100 | 3MPD | 275 | - | - | Sebacic Acid | 400 | 675 | 0 | Ti (acac) | 0.074 | 145 |
| Example 3 | PHBH | 100 | 16HG | 237 | - | - | Adipic Acid | 261 | 498 | 0 | Ti (acac) | 0.359 | 145 |
| Example 4 | PHBH | 100 | 2MPD | 106 | BzDM | 146 | Sebacic Acid | 402 | 509 | 25 | TIPT | 0.241 | 145 |
| Example 5 | PHBH | 100 | 3MPD | 237 | - | - | Dimer Acid | 1078 | 1314 | 0 | Ti (acac) | 0.424 | 145 |
| Example 6 | PHBH | 100 | 2MPD | 106 | BzDM | 146 | Sebacic Acid | 402 | 655 | 25 | TIPT | 0.241 | 145 |
| Comparative Example 1 | PHBV | 100 | 3MPD | 274 | BzDM | - | Sebacic Acid | 367 | 641 | 0 | Ti (acac) | 0.074 | 180 |
| Comparative Example 2 | PHBH | 100 | 2MPD | 11 | BzDM | 268 | Sebacic Acid | 367 | 646 | 50 | TIPT | 0.158 | 145 |

The evaluation results of Examples 1 to 6 and Comparative Examples 1 and 2 are collectively shown in Table 2.

**[Table 2]**

| | PHA-Modified Polyester | | | | | | | | |
|---|---|---|---|---|---|---|---|---|---|
| | Hydroxyl Value (mgKOH/g) | GPC | | Thermal Decomposition | Solvent Solubility | | | | |
| | | Mn | Mw | | Ethyl Acetate | MEK | Toluene | Cyclohexanone | PGMEA |
| Example 1 | 35.1 | 5400 | 6200 | A | A | A | A | A | A |
| Example 2 | 50.1 | 4300 | 5000 | A | A | A | A | A | A |
| Example 3 | 72.3 | 3600 | 4500 | A | A | A | A | A | A |
| Example 4 | 45.2 | 4200 | 10500 | A | A | A | A | A | A |
| Example 5 | 7.0 | 14100 | 30500 | A | A | A | A | A | A |
| Example 6 | 3.9 | 26000 | 54600 | A | C | B | C | B | B |
| Comparative Example 1 | 10.1 | 8900 | 19000 | C | - | - | - | - | - |
| Comparative Example 2 | 33.7 | 5000 | 12000 | A | C | C | C | C | C |

Each abbreviation in Tables 1 to 6 is as follows. Here, the decomposition temperature of the polyhydroxyalkanoic acid indicates a value calculated on the basis of the calculation method described above, with reference to NPL (Macromolecules, 23, (1990), 1933-1936 and J. Appl. Polym. Sci., 132, (2015), 41258).

### -Polyhydroxyalkanoic Acid (PHA)-

PHBV: poly(3-hydroxybutyrate-co-3-hydroxyvalerate), a decomposition temperature of 180°C, Product Name: ENMAT Y1000, manufactured by TianAn Biopolymer.
P3HB: poly(3-hydroxybutyrate), a decomposition temperature of 175°C, manufactured by Aldrich Chemical Company Inc.
PHBH: poly(3-hydroxybutyrate-co-3-hydroxyhexanoate), a decomposition temperature of 170°C, Product Name: Kaneka Biodegradable Polymer PHBH, manufactured by KANEKA CORPORATION.

### -Diol-

3MPD: 3-methyl-1,5-pentanediol
16HG: 1,6-hexanediol
2MPD: 2-methyl-1,3-propanediol
BzDM: 1,4-benzene dimethanol
DEG: diethylene glycol

### -Dicarboxylic Acid-

Dimer Acid: a compound having the following structure as a main component (Cas Number: 61788-89-4), Product Name: Tsunodyme 395, manufactured by TSUNO GROUP CO., LTD.

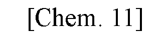

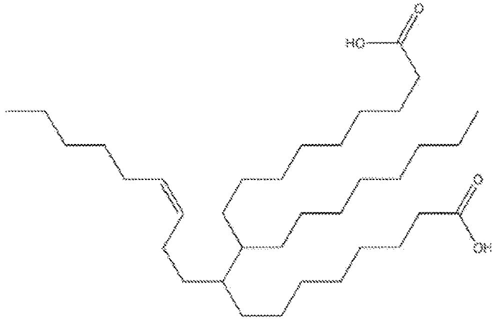

### -Catalyst-

Ti(acac): titanyl acetyl acetate
TIPT: titanium tetraisopropoxide
DOT: dioctyl tin

### -Solvent-

MEK: methyl ethyl ketone
PGMEA: propylene glycol monomethyl ether acetate

### (Example 7)

100 parts of poly(3-hydroxybutyrate-co-3-hydroxyhexanoate), 206 parts of 3-methyl-1,5-pentanediol, 294 parts of a sebacic acid, and 0.700 parts of titanium tetraisopropoxide were put in a batch type polyester reaction vessel provided with a stirrer, a nitrogen gas introduction pipe, a rectification pipe, a moisture separator, and the like, and the inner temperature was retained at 145°C under a stream of nitrogen. When the acid value was 2 mgKOH/g or less, the reaction was completed, and polyester polyol was obtained.

As a result of the GC measurement, the residual monomer was not checked.

The evaluation result of the thermal decomposition rate by the NMR method was A.

The evaluation result of the solvent solubility was A.

### (Example 8)

Polyester polyol was obtained as with Example 7, except that as a raw material, poly(3-hydroxybutyrate-co-3-hydroxyhexanoate), 2-methyl-1,3-propanediol, 1,4-benzene dimethanol, a sebacic acid, and titanium tetraisopropoxide were used as with a compounding amount shown in Table 3.

As a result of the GC measurement, the residual monomer was not checked.

The evaluation result of the thermal decomposition rate by the NMR method was A.

The evaluation result of the solvent solubility was A.

### (Example 9)

The same procedure as that of Example 8 was performed, and then, the reaction was continuously performed by setting the reaction vessel in a highly depressurized state, water and glycol generated as a by-product were continuously removed, and polyester polyol was obtained.

The evaluation result of the solvent solubility was as shown in Table 4.

### (Comparative Example 3)

Polyester polyol was obtained as with Example 7, except that as a raw material, poly(3-hydroxybutyrate-co-3-hydroxyhexanoate), 1,4-benzene dimethanol, a sebacic acid, and titanium tetraisopropoxide were used as with a compounding amount shown in Table 3.

The evaluation result of the solvent solubility was C.

### (Comparative Example 4)

Polyester polyol was obtained as with Example 1, except that a retention temperature was set to 180°C.

The evaluation result of the thermal decomposition rate by the NMR method was C.

The reaction conditions of Examples 7 to 9 and Comparative Examples 3 and 4 were collectively shown in Table 3.

Note that, the reactions of Examples 7 to 9 and Comparative Examples 3 and 4 correspond to the following method (i).
(i): A method of putting the polyhydroxyalkanoic acid, the diol, and the dicarboxylic acid in the reaction vessel to react with each other

**[Table 3]**

| | Raw Material | | | | | | | | | | | | Reaction Temperature (°C) |
|---|---|---|---|---|---|---|---|---|---|---|---|---|---|
| | PHA | | Diol | | | | Dicarboxylic Acid | | Compounding Amount (Parts) of Diol + Dicarboxylic Acid | Aromatic Molar Ratio (%) | Catalyst | | |
| | | | Aliphatic | | Aromatic | | Aliphatic | | | | | | |
| | Type | Compounding Amount (Parts) | Type | Compounding Amount (Parts) | Type | Compounding Amount (Parts) | Type | Compounding Amount (Parts) | | | Type | Compounding Amount (Parts) | |
| Example 7 | PHBH | 100 | 3MPD | 206 | | | Sebacic Acid | 294 | 500 | 0 | TIPT | 0.700 | 145 |
| Example 8 | PHBH | 100 | 2MPD | 106 | BzDM | 146 | Sebacic Acid | 402 | 667 | 25 | TIPT | 0.241 | 145 |
| Example 9 | PHBH | 100 | 2MPD | 106 | BzDM | 146 | Sebacic Acid | 402 | 667 | 25 | TIPT | 0.241 | 145 |
| Comparative Example 3 | PHBH | 100 | 2MPD | 11 | BzDM | 268 | Sebacic Acid | 367 | 666 | 50 | TIPT | 0.158 | 145 |
| Comparative Example 4 | PHBH | 100 | 2MPD | 106 | BzDM | 146 | Sebacic Acid | 402 | 667 | 25 | TIPT | 0.241 | 180 |

The evaluation results of Examples 7 to 9 and Comparative Examples 3 and 4 were collectively shown in Table 4.

**[Table 4]**

| | PHA-Modified Polyester | | | | | | | | |
|---|---|---|---|---|---|---|---|---|---|
| | Hydroxyl Value (mgKOH/g) | GPC | | Thermal Decomposition | Solvent Solubility | | | | |
| | | Mn | Mw | | Ethyl Acetate | MEK | Toluene | Cyclohexanone | PGMEA |
| Example 7 | 47.5 | 2600 | 4100 | A | A | A | A | A | A |
| Example 8 | 30.2 | 4500 | 11000 | A | A | A | A | A | A |
| Example 9 | 4.1 | 30000 | 68000 | A | C | B | C | B | C |
| Comparative Example 3 | 32.1 | 5500 | 14000 | A | C | C | C | C | C |
| Comparative Example 4 | 10.5 | 8500 | 19500 | C | - | - | - | - | - |

### (Example 10)

100 parts of diethylene glycol, 163 parts of a sebacic acid, and 0.088 parts of titanium tetraisopropoxide were put in a batch type polyester reaction vessel provided with a stirrer, a nitrogen gas introduction pipe, a rectification pipe, a moisture separator, and the like, the inner temperature was retained at 220°C under a stream of nitrogen, dehydration and condensation were performed for a total of nine hours, and polyester resin (PE1) was obtained.

The viscosity of the polyester resin (PE1) at 135°C was 0.167 Pa·s.

The viscosity was measured by the following method. The same applies to Examples 11 to 16 and Comparative Examples 5 to 7.

### [Viscosity Measurement Method]

The viscosity of the polyester resin was measured by using a rotational rheometer.

Specifically, the viscosity was measured in the condition of a gap of 1 mm and a shear rate of 10 s⁻¹ by a rotational rheometer "MCR-102", manufactured by Anton Paar GmbH, by setting the measurement temperature to be the same as the reaction temperature, and by using a parallel plate jig with a diameter of 25 mm as a measurement jig.

500 parts of the polyester resin (PE1) were put in the same batch type reaction vessel together with 100 parts of poly(3-hydroxybutyrate-co-3-hydroxyhexanoate) and 0.060 parts of dioctyl tin, and the inner temperature was retained at 135°C under a stream of nitrogen. When there was no change in the molecular weight by GPC, the reaction was completed, and polyester polyol was obtained.

As a result of the GC measurement, the residual monomer was not checked.

The evaluation result of the thermal decomposition rate by the NMR method was A.

The evaluation result of the solvent solubility was A.

### (Example 11)

Polyester resin (PE2) was obtained as with Example 10, except that the type and the compounding amount of diol, a dicarboxylic acid, and a catalyst were as shown in Table 5.

The viscosity of the polyester resin (PE2) at 145°C was 0.008 Pa s.

Polyester polyol was obtained as with Example 10, except that the type and the compounding amount of PHA, a polyester resin, and a catalyst, and a reaction temperature were as shown in Table 6.

As a result of the GC measurement, the residual monomer was not checked.

The evaluation result of the thermal decomposition rate by the NMR method was A.

The evaluation result of the solvent solubility was B.

### (Example 12)

Polyester polyol (PE3) was obtained as with Example 10, except that the type and the compounding amount of diol, a dicarboxylic acid, and a catalyst were as shown in Table 5.

The viscosity of the polyester resin (PE3) at 145°C was 0.008 Pa s.

Polyester polyol was obtained as with Example 10, except that the type and the compounding amount of PHA, a polyester resin, and a catalyst, and a reaction temperature were as shown in Table 6.

As a result of the GC measurement, the residual monomer was not checked.

The evaluation result of the thermal decomposition rate by the NMR method was A.

The evaluation result of the solvent solubility was as shown in Table 7.

### (Example 13)

Poly(1,6-hexanediol adipate) of which the viscosity at 145°C was 0.208 Pa·s was used as a polyester resin (PE4).

100 parts of poly(3-hydroxybutyrate-co-3-hydroxyhexanoate), 68 parts of poly(1,6-hexanediol adipate), and 0.205 parts of titanium tetraisopropoxide were put in a batch type polyester reaction vessel provided with a stirrer, a nitrogen gas introduction pipe, a rectification pipe, a moisture separator, and the like, and the inner temperature was retained at 145°C under a stream of nitrogen. When there was no change in the molecular weight by GPC, the reaction was completed, and polyester polyol was obtained.

As a result of the GC measurement, the residual monomer was not checked.

The evaluation result of the thermal decomposition rate by the NMR method was A.

The evaluation result of the solvent solubility was as shown in Table 7.

### (Example 14)

Polyester resin (PE5) was obtained as with Example 10, except that the type and the compounding amount of diol, a dicarboxylic acid, and a catalyst were as shown in Table 5.

The viscosity of the polyester resin (PE5) at 145°C was 0.9 Pa s.

Polyester polyol was obtained as with Example 10, except that the type and the compounding amount of PHA, a polyester resin, and a catalyst, and a reaction temperature were as shown in Table 6.

As a result of the GC measurement, the residual monomer was not checked.

The evaluation result of the thermal decomposition rate by the NMR method was A.

The evaluation result of the solvent solubility was B.

### (Example 15)

Poly(1,6-hexanediol adipate) of which the viscosity at 145°C was 4.5 Pa s was used as a polyester resin (PE6).

Polyester polyol was obtained as with Example 13, except that the type and the compounding amount of PHA, a polyester resin, and a catalyst, and a reaction temperature were as shown in Table 6.

The evaluation result of the thermal decomposition rate by the NMR method was A.

The evaluation result of the solvent solubility was B.

### (Example 16)

The same procedure as that of Example 15 was performed, and then, the reaction was continuously performed by setting the reaction vessel in a highly depressurized state, water and glycol generated as a by-product were continuously removed, and polyester polyol was obtained.

The evaluation result of the solvent solubility was as shown in Table 7.

### (Comparative Example 5)

Polyester polyol (PE7) was obtained as with Example 10, except that the type and the compounding amount of diol, a dicarboxylic acid, and a catalyst were as shown in Table 5.

The viscosity of the polyester resin (PE7) at 145°C was 0.9 Pa s.

Polyester polyol was obtained as with Example 10, except that the type and the compounding amount of PHA, a polyester resin, and a catalyst, and a reaction temperature were as shown in Table 6.

The evaluation result of the solvent solubility was C.

### (Comparative Example 6)

Polyester resin (PE8) was obtained as with Example 10, except that the type and the compounding amount of diol, a dicarboxylic acid, and a catalyst were as shown in Table 5.

The viscosity of the polyester resin (PE8) at 145°C was 14.9 Pa s.

Polyester polyol was obtained as with Example 10, except that the type and the compounding amount of PHA, a polyester resin, and a catalyst, and a reaction temperature were as shown in Table 6.

As a result of the GC measurement, the residual monomer was not checked.

The evaluation result of the solvent solubility was C.

### (Comparative Example 7)

Poly(1,6-hexanediol adipate) of which the viscosity at 180°C was 0.061 Pa s was used as a polyester resin (PE9).

Polyester polyol was obtained as with Example 13, except that the type and the compounding amount of PHA, a polyester resin, and a catalyst, and a reaction temperature were as shown in Table 6.

The evaluation result of the thermal decomposition rate by the NMR method was C.

The reaction conditions of Examples 10 to 16 and Comparative Examples 5 to 7 are collectively shown Tables 5 and 6, and the evaluation results are collectively shown in Table 7.

Note that, the reactions of Examples 10 to 16 and Comparative Examples 5 to 7 correspond to the following method (iii).
(iii): A method of allowing the polyester resin to react with the polyhydroxyalkanoic acid

**[Table 5]**

| | Polyester Resin | | | | | | | | | | | | | |
|---|---|---|---|---|---|---|---|---|---|---|---|---|---|---|
| | PE | Diol | | | | Dicarboxylic Acid | | | | Compounding Amount (Parts) of Diol + Dicarboxylic Acid | Aromatic Molar Ratio (%) | Catalyst | | Viscosity |
| | | Aliphatic | | Aromatic | | Aliphatic | | Aromatic | | | | | | |
| | | Type | Compounding Amount (Parts) | Type | Compounding Amount (Parts) | Type | Compounding Amount (Parts) | Type | Compounding Amount (Parts) | | | Type | Compounding Amount (Parts) | Pa·s |
| Example 10 | PE1 | DEG | 100 | - | - | Sebacic Acid | 163 | - | - | 263 | 0 | TIPT | 0.088 | 0.167 |
| Example 11 | PE2 | 3MPD | 100 | - | - | Sebacic Acid | 82 | - | - | 182 | 0 | Ti (acac) | 0.036 | 0.008 |
| Example 12 | PE3 | | | - | - | | | - | - | | | | | |
| Example 13 | PE4 | Poly(1,6-Hexanediol Adipate) | | | | | | | | | | | | 0.208 |
| Example 14 | PE5 | 2MPD | 100 | - | - | Sebacic Acid | 97 | Phthalic Anhydride | 77 | 268 | 25 | TIPT | 0.067 | 0.9 |
| Example 15 | PE6 | Poly(1,6-Hexanediol Adipate) | | | | | | | | | | | | 4.5 |
| Example 16 | PE6 | Poly(1,6-Hexanediol Adipate) | | | | | | | | | | | | 4.5 |
| Comparative Example 5 | PE7 | 2MPD | 100 | BzDM | 148 | Sebacic Acid | 190 | Phthalic Anhydride | 143 | 581 | 50 | TIPT | 0.238 | 0.9 |
| Comparative Example 6 | PE8 | 2MPD | 100 | BzDM | 167 | - | - | Phthalic Anhydride | 313 | 547 | 75 | TIPT | 0.208 | 14.9 |
| Comparative Example 7 | PE9 | Poly(1,6-Hexanediol Adipate) | | | | | | | | | | | | 0.061 |

**[Table 6]**

| | Raw Material | | | | | | | | Reaction Temperature (°C) |
|---|---|---|---|---|---|---|---|---|---|
| | PHA | | Polyester Resin | | | | Catalyst | | |
| | Type | Compounding Amount (Parts) | Type | Compounding Amount (Parts) | Aromatic Molar Ratio (%) | Viscosity (Pa·s) | Type | Compounding Amount (Parts) | |
| Example 10 | PHBH | 100 | PE1 | 500 | 0 | 0.167 | DOT | 0.060 | 135 |
| Example 11 | P3HB | 100 | PE2 | 498 | 0 | 0.008 | Ti (acac) | 0.084 | 145 |
| Example 12 | PHBV | 100 | PE3 | 498 | 0 | 0.008 | Ti (acac) | 0.084 | 145 |
| Example 13 | PHBH | 100 | PE4 | 68 | 0 | 0.208 | TIPT | 0.205 | 145 |
| Example 14 | PHBH | 100 | PE5 | 503 | 25 | 0.9 | TIPT | 0.250 | 145 |
| Example 15 | PHBH | 100 | PE6 | 67 | 0 | 4.5 | TIPT | 0.094 | 145 |
| Example 16 | PHBH | 100 | PE6 | 67 | 0 | 4.5 | TIPT | 0.094 | 145 |
| Comparative Example 5 | PHBH | 100 | PE7 | 469 | 50 | 0.9 | TIPT | 0.073 | 145 |
| Comparative Example 6 | PHBH | 100 | PE8 | 505 | 75 | 14.9 | TIPT | 0.215 | 145 |
| Comparative Example 7 | PHBH | 100 | PE9 | 68 | 0 | 0.061 | TIPT | 0.205 | 180 |

**[Table 7]**

| | PHA-Modified Polyester | | | | | | | | |
|---|---|---|---|---|---|---|---|---|---|
| | Hydroxyl Value (mgKOH/g) | GPC | | Thermal Decomposition | Solvent Solubility | | | | |
| | | Mn | Mw | | Ethyl Acetate | MEK | Toluene | Cyclohexanone | PGMEA |
| Example 10 | 35.8 | 3000 | 7000 | A | A | A | A | A | A |
| Example 11 | 97.2 | 1500 | 3200 | A | B | B | B | B | B |
| Example 12 | 99.0 | 1600 | 3400 | A | A | A | B | A | A |
| Example 13 | 32.1 | 4200 | 7400 | A | A | A | B | A | B |
| Example 14 | 28.6 | 5100 | 11800 | A | B | B | B | B | B |
| Example 15 | 5.3 | 32800 | 41800 | A | B | B | B | B | B |
| Example 16 | 4.1 | 41000 | 53000 | A | C | B | C | B | B |
| Comparative Example 5 | 17.0 | 7900 | 17400 | A | C | C | C | C | C |
| Comparative Example 6 | 11.6 | 10600 | 23800 | A | C | C | C | C | C |
| Comparative Example 7 | 10.8 | 8800 | 18500 | C | - | - | - | - | - |

From Examples described above, it was possible to check that the modified polyester resin production method of the invention is capable of producing the modified polyester resin that is obtained by modifying the polyhydroxyalkanoic acid and is excellent in the solvent solubility by suppressing the thermal decomposition without requiring the purification of the product.

## Claims

1. A modified polyester resin production method, comprising
a step of allowing a polyhydroxyalkanoic acid to react with a reactive raw material satisfying at least any one of Condition (A-1) and Condition (A-2) described below, and Condition (B) described below, in the absence of a solvent and at a reaction temperature lower than a decomposition temperature of the polyhydroxyalkanoic acid.
Condition (A-1): The reactive raw material contains a diol and a dicarboxylic acid component.
Condition (A-2): The reactive raw material contains a polyester resin other than the polyhydroxyalkanoic acid.
Condition (B): A ratio of an aromatic monomer configuring the reactive raw material in the reactive raw material is 0% by mole or more and less than 50% by mole.

2. The modified polyester resin production method according to claim 1,
wherein the reactive raw material satisfies Condition (A-1) described above and Condition (B) described above.

3. The modified polyester resin production method according to claim 1,
wherein the reactive raw material satisfies Condition (A-2) described above and Condition (B) described above.

4. The modified polyester resin production method according to claim 3,
wherein the polyester resin has a viscosity of 4 Pa·s or less at the reaction temperature.

5. The modified polyester resin production method according to any of claims 1 to 4,
wherein the reaction temperature is 100°C or higher and lower than the decomposition temperature of the polyhydroxyalkanoic acid.

6. The modified polyester resin production method according to any of claims 1 to 4,
wherein the reaction temperature is a temperature or lower, which is 15°C lower than the decomposition temperature of the polyhydroxyalkanoic acid.

7. The modified polyester resin production method according to any of claims 1 to 6,
wherein the monomer configuring the polyhydroxyalkanoic acid contains at least any of a hydroxyalkanoic acid represented by Formula (2) described below, lactone of the hydroxyalkanoic acid represented by Formula (2) described below, and lactide of the hydroxyalkanoic acid represented by Formula (2) described below. 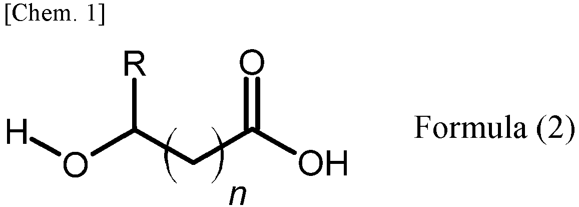 (In Formula (2), R represents a hydrogen atom or an alkyl group having 1 to 6 carbon atoms, and n represents an integer of 0 to 6.)

8. The modified polyester resin production method according to any of claims 1 to 7,
wherein the monomer configuring the polyhydroxyalkanoic acid contains a 3-hydroxybutanoic acid.

9. The modified polyester resin production method according to claim 8,
wherein the monomer configuring the polyhydroxyalkanoic acid further contains at least any one of a 3-hydroxyvaleric acid and a 3-hydroxyhexanoic acid.

10. The modified polyester resin production method according to claim 8,
wherein the monomer configuring the polyhydroxyalkanoic acid further contains a 3-hydroxyhexanoic acid.
